# EUROPEAN PATENT APPLICATION

(11) **EP 1 564 257 A1**
(43) Date of publication of application: **17.08.2005**
(21) Application number: 03774101.4
(22) Date of filing: 20.11.2003
(51) Int. Cl.: C08L 101/00, C08K 5/098, C08L 23/26

(54) **THERMOSETTING RESIN COMPOSITION**

(30) Priority: 22.11.2002 JP 2002340067
(71) Applicant: NIPPON PETROCHEMICALS CO., LTD., Tokyo 105-0001 (JP)
(72) Inventor: TAKASHIMA, Tsutomu, Tsurumi-ku, Yokohama, Kanagawa 230-0078 (JP)
(74) Representative: Strehl Schübel-Hopf & Partner
(86) International application number: PCT/JP2003/014837
(87) International publication number: WO 2004/048477

(57) **Abstract**

A thermosetting resin composition which is improved in impact resistance, thermal crack resistance, oxidative degradation resistance and thermal degradation resistance without impairing the heat resistance represented by HDT and which is suitable for the encapsulation of semiconductors and the like, is provided. The composition is comprised by (A) a thermosetting resin; (B) any of the following mono-olefin liquid polymers (a) to (c) : wherein (a) a mono-olefin liquid polymer having as least one epoxy group (hereinafter referred to as "epoxy group containing mono-olefin liquid polymer"), (b) a mono-olefin liquid polymer having at least one aldehyde group (hereinafter referred to as "aldehyde group containing mono-olefin liquid polymer"), and (c) a mono-olefin liquid polymer having at least one ketone group(hereinafter referred to as "ketone group containing mono-olefin liquid polymer")(hereinafter the polymers (a) to (c) are collectively referred to as "reactive mono-olefin liquid polymer"); and (C) an organometallic compound and/or a metal ester compound. The composition can develop a sea-island phase structure composed of a continuous phase mainly made of a cured product of the thermosetting resin (containing a curing agent) and a dispersed phase which is mainly made of the thermosetting resin (containing a curing agent) and the reactive mono-olefin polymer wherein the whole periphery of each dispersed particle is covered with at least one interfacial phase.

## Description

### Technical Field

The present invention relates to the improvement of impact resistance properties of a thermosetting resin composition which is used with "a reactive mono-olefin liquid polymer" and an organometallic compound and/or a metal ester compound and provides especially an epoxy resin compound which is improved in impact resistance, cracking resistance in thermal cracking test, oxidative degradation resistance and thermal degradation resistance, and which is used for the encapsulation of semiconductors and the like.

### Background Art

A thermosetting resin is used in many applications independently or combinations with other resins, and especially in many applications of electrical and mechanical components from the point of advantages such that electrical insulation properties are good, mechanical strength is sufficient, thermal resistance is good, coefficient of thermal expansion is in low level and moreover the price is low and the like. On the other hand, lowness of toughness is given as the worst disadvantage which is common to the thermosetting resin, and many studies have been conducted for the improvements.

The impact resistance improvement of an epoxy resin composition which is one example of the thermosetting resins has been proposed by the introduction of flexible component to epoxy resin. For example, it is widely recognized that the use of rubber particle with core shell structure (e.g. Refer to Patent Documents 1 and 2.), the introduction of reactive liquid rubber (e.g. Refer to Patent Documents 3 to 5.), and the introduction of reactive liquid polybutene (e.g. Refer to Patent Document 6.) and the like are effective, but simultaneously the questionable points are cleared up.
For example, the method that flexible epoxy resin is reacted with reactive material as described in reference Patent Documents 1 to 6 makes thermal resistance and mechanical strength and the like such as flexible strength to low level, and the method to add core shell structure rubber particle, for example, MBS powder (core shell resin particle of methyl methacrylate · styrene · butadiene) and epoxy group containing composite acrylic rubber particle and rubber fine particle of crosslinking acrylic rubber fine particle and the like makes the increase of viscosity significantly and has a problem of storage stability.

The method to add the reactive liquid rubber, for example, carboxyl-terminated modified butadiene acrylonitrile rubber (hereinafter referred to as CTBN), has less occurrence of the above mentioned problem.
Here, for the epoxy resin composition containing CTBN, during the progress of curing reaction, CTBN which is compatibilized initially in epoxy resin generates phase separation from epoxy resin, and a continuous phase which is formed by epoxy resin and a dispersed phase which is formed by CTBN, are formed (a sea-island structure), so that the impact resistance properties are improved by relying on the phase structure characteristics. On the other hand, CTBN which does not generate phase separation and is taken into the continuous phase of epoxy resin makes the degradation of thermal resistance which is represented by heat distortion temperature (hereinafter referred to as HDT) of epoxy resin. To be more precise, as for CTBN, the problem is pointed out that the control with respect to reactivity and affinity properties based on the structure is not sufficient, and by a kind of curing agent and curing condition, the size and distribution of the CTBN dispersed phase varies so that the properties of the epoxy resin composition turn to change significantly. Moreover, since CTBN has unsaturated bond parts in the main chain, the essential problem has been known with respect to long term reliability such that oxidation degradation and thermal degradation and the like easily occur.
Also, as for the liquid rubber modified epoxy resin (e.g. Refer to Patent Document 7) which epoxy resin is modified by CTBN, and which is proposed recently, these problems are not sufficiently solved.

On the other hand, the improvement studies on phenolic resin have been conducted. For example, studies on the improvement of impact resistance of specific phenolic resin by aromatic polyester (e.g. Refer to Patent Document 8), and on toughening phenolic resin by specific polyethylene terephthalate, polyurethane, methyl methacrylate based copolymer and the like (e.g. Refer to Patent Document 9) have been conducted, but those materials are extremely unsatisfactory where the improvement on toughening is insufficient and flowability deteriorates and the like.

As for phenolic resin, the improvement of impact resistance by use of reactive liquid rubber is widely studied method. For example, the kneeding method of emulsion polymerization latex of the functional rubber having functional groups such as epoxy group, hydroxyl group, carboxyl group, and amino group to phenolic resin(e.g. Refer to Patent Document 10), the method that conjugated diene based rubber latex as NBR and the like which has good compatibility, under making to contain the anion based surface active agent, is made to disperse into resin before dehydration process of phenolic resin (e.g. Refer to Patent Document 11), and the compounding method of epoxy polybutadiene and radical polymer initiator at kneeding compound materials(e.g. Refer to Patent Document 12), are inevitable to degrade flowability significantly when the rubber is added to the extent that toughening of phenolic resin takes effect. Accordingly, there are problems to impair the practical processability and with toughening, the excellent thermal resistance of the phenolic resin deteriorates.
[Patent Document 1]
   JP61-42941 B
[Patent Document 2]
   JP 2-117948 A
[Patent Document 3]
   JP58-25391 B
[Patent Document 4]
   JP10-182937 A
[Patent Document 5]
   JP3036657 B
[Patent Document 6]
   EP045749A
[Patent Document 7]
   JP 2001-089638 A
[Patent Document 8]
   JP61-168652 A
[Patent Document 9]
   JP62-209158 A
[Patent Document 10]
   JP 62-59660A
[Patent Document 11]
   JP3-17149 A
[Patent Document 12]
   JP 3-221555A

### Disclosure of Invention

The present invention is to provide a thermosetting resin composition such as epoxy resin and phenolic resin and the like which improves impact resistance, thermal crack resistance, oxidative degradation resistance and thermal degradation resistance without impairing heat resistance represented by HDT and is suitable for the encapsulation of semiconductors and the like.

As the result of keen studies, the inventor discovered that the above objective can be accomplished by use of a "reactive mono-olefin liquid polymer" and an organo- metallic compound and/or a metal ester compound and completed the present invention.

The first aspect of the present invention relates to a thermosetting composition comprising (A) a thermosetting resin, (B) any of the following liquid mono-olefin polymers (a) to (c) wherein:
(a) a liquid mono-olefin polymer having as least one epoxy group(hereinafter referred to as "epoxy group containing mono-olefin liquid polymer "),
(b) a liquid mono-olefin polymer having at least one aldehyde group(hereinafter referred to as "aldehyde group containing mono-olefin liquid polymer"),
(c) a liquid mono-olefin polymer having at least one ketone group(hereinafter referred to as "ketone group containing liquid mono-olefin polymer")(hereinafter the polymers (a) to (c) are collectively referred to as "reactive mono-olefin liquid polymer"), and (C) an organometallic compound and/or a metal ester compound.
   The second aspect of the present invention according to the first point of the present invention relates to the thermosetting composition comprising wherein the "reactive mono-olefin liquid polymer" comprises the "epoxy group containing mono-olefin liquid polymer" which epoxy group is formed on the terminal carbon as the above mentioned (a), and/or the "aldehyde group containing mono-olefin liquid polymer" which the aldehyde group is formed on the terminal carbon as the above mentioned (b).
   The third aspect of the present invention according to any of the first point and the second point of the present invention relates to the thermosetting composition comprising wherein 80% or more of repeated unit in any main chain structure of the "reactive mono-olefin liquid polymer" is represented by the structure of Formula (1). 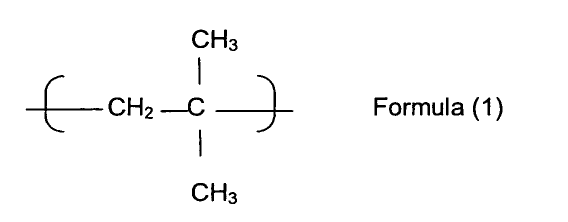
   The fourth aspect of the present invention according to any of the first point to the third point of the present invention relates to the thermosetting composition comprising wherein the number-average molecular weight of any of the "reactive mono-olefin liquid polymer" is in the range of 300 to 6,000.
   The fifth aspect of the present invention according to any of the first point to the fourth point of the present invention relates to the thermosetting composition comprising wherein "the organometallic compound and/or the metal ester compound" is any of (d) to (f).
(d) Kind of metal is any of cobalt, tin, zinc, copper.
(e) Organic structure part is paraffin or fatty acid having chain branch of 10 or less carbons of the main chain.
(f) Organic structure part is naphthenic acid based fatty acid.

The sixth aspect of the present invention according to any of the first point to the fifth point of the present invention relates to the thermosetting composition comprising wherein the main phase structure of the resin phase is a sea-island structure comprising a continuous phase and a dispersed phase and also, an interfacial phase is the phase structure which exists in the whole periphery of said dispersed phase.

The seventh aspect of the present invention according to any of the first point to the fifth point of the present invention relates to the thermosetting composition comprising wherein the average particle size of the dispersed phase observed by transmission electron microscope is 20µm or less.

The eighth aspect of the present invention according to any of the first point to the fifth point of the present invention relates to the thermosetting composition comprising wherein the "thermosetting resin" (A) is epoxy resin or phenolic resin.

### Brief Description of Drawings

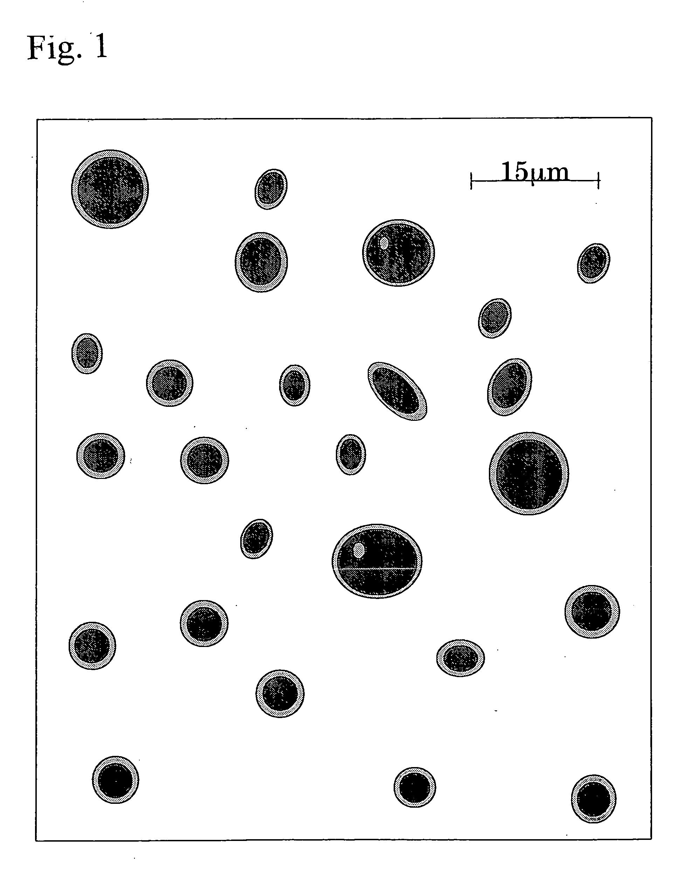

Figure 1 is a schematic illustration of a typical phase structure.

### Best Mode for Carrying Out the Invention

The present invention will be described in detail as follows. The thermosetting resin according to the present invention is defined to the material which is initially normal liquid low molecular weight compound (sometimes which can be called as prepolymer) and which has a property that generates propagation of polymerization of prepolymer and structuralization of three dimensional network by bringing about chemical change on account of application of heat, catalyst or ultraviolet ray and the like. Accordingly the heating is not always required. To put concretely, typical examples are listed as phenolic resin, urea resin, melamine resin, epoxy resin, urethane resin, silicone resin, alkyd resin, allyl resin, unsaturated polyester resin, diallyl phthalate resin, furan resin, polyimide and the like.

Phenolic resin in the thermosetting resin according to the present invention is not limited specifically and is on the market, and novolak type phenolic resin, which is given as an example, is obtained by the method where phenol and formalin (formaldehyde aqueous solution) or formaldehyde are fed into a reaction vessel in the mole ratio of phenol and formaldehyde so as to be 0.5 to 1.0, and then, heated after addition of catalysts such as oxalic acid, hydrochloric acid, sulfuric acid, or toluene sulfonic acid and the like, and after reflux reaction is conducted for a certain period of time, in order to remove separated water, vacuum dehydration or leaving-rest dehydration is conducted, and then remained water and unreacted phenol are removed. Also, with respect to resol type phenolic resin, the above mentioned method can be used as well by controlling the thermal history at dynamic heat treatment accurately. These resins or co-condensation phenolic resin obtained by use of multiple raw materials are applied independently or by combining two kinds or more.

As for epoxy resin of the thermosetting resin according to the present invention, properties, epoxy equivalent value, molecular weight, molecular structure and the like are not limited, and chemical compounds which have two oxirane-rings or more in one molecule can be applied, and publicly known various types of epoxy resin can be used.

For example, glycidyl ether type epoxy resin such as bisphenol A, bisphenol F, bisphenol A bromide, or novolak glycidyl ether and the like; glycidyl ester type epoxy resin such as hexahydrophthalic acid glycidyl ester and dimmer-acid glycidyl ester and the like; glycidyl amine type epoxy resin such as triglycidyl isocyanurate or tetraglycidyl phenyl methane and the like; linear fatty acid epoxy resin such as epoxy polybutadiene or epoxidized soybean oil and the like; and moreover, alicyclic epoxy resin such as 3,4-epoxy-6- methylcyclohexyl methyl carboxylate, or 3,4-epoxy cyclohexylmethyl carboxylate and the like;, can be listed and they can be applied with one kind or two kinds or more.

Epoxy resin which exhibits liquid in room temperature is listed as recommendable, for example, glycidyl ether type epoxy resin which is produced under alkaline reaction condition between epichlorohydrin and aromatic chemical compound having one hydroxyl group or more is listed and concretely bisphenol A epoxy resin, or trade name of Epikote #828 (Manufactured by Japan Epoxy Resin, Co., Ltd.) is listed.

The "reactive mono-olefin liquid polymer" according to the present invention is the polymer that various reactive functional groups are introduced to mono-olefin polymer.

To be more precise, three kinds of liquid polymers are defined as,
(a) a liquid mono-olefin polymer having as least one epoxy group(hereinafter referred to as "epoxy group containing mono-olefin liquid polymer"), which epoxy group is introduced,
(b) a liquid mono-olefin polymer having at least one aldehyde group(hereinafter referred to as "aldehyde group containing mono-olefin liquid polymer"), which aldehyde group is introduced,
(c) a liquid mono-olefin polymer having at least one ketone group(hereinafter referred to as "ketone group containing liquid mono-olefin polymer"), which ketone group is introduced.

The "reactive mono-olefin liquid polymer" according to the present invention can be easily produced by publicly known methods which carbon-carbon unsaturated bond in liquid polybutene is converted to aldehyde group and the like by means of publicly known techniques.

Hereinafter, as for the production of the "reactive mono-olefin liquid polymer", the recommendable production method of the "aldehyde group containing mono-olefin liquid polymer" is given as the example.

To begin with, polybutene containing a large quantity of terminal vinylidene structure is produced in accordance with JP10-306128 A. According to said method, by the use of olefin raw materials which are constituted by isobutene independently or isobutene and in some cases butane-1, butane-2, they are made to polymerize by trifluoric boron based catalyst, then since n-butene practically does not copolymerize with isobutene, liquid polybutene which contains 60 mole percent or more of terminal vinylidene structure, and also which has the Formula(1) structure with 80% or more of the repeating unit in the main chain, can be easily obtained.

Then, epoxidized compound is obtained by conducting epoxidized reaction to said terminal position of carbon-carbon unsaturated bond with peroxide compound and the like (USP 3382255). Said epoxidized product is epoxy group containing liquid polybutene (hereinafter referred to as "epoxy group containing mono-olefin liquid polymer") which epoxy structure is only formed virtually on the terminal carbon.

Then, the "aldehyde group containing mono-olefin liquid polymer" is obtained by conducting isomerization reaction to the "epoxy group containing mono-olefin liquid polymer, which is pubilcly known and described in, for example, JP 2908557 B, JP 3-503783 A.

The "reactive liquid polybutene" which is obtained by the above mentioned production method can be used in any form such as extremely pure product by isolation, a mixture of containing unreacted polybutene group without any change, or a mixture by further addition of liquid polybutene.

The production method of the "aldehyde group containing liquid polybutene" is recommendable from the point that unreacted product in each process can be used directly, where polymerization reaction is conducted by using C4 olefin as raw material and polybutene, which contains terminal vinylidene structure having more than predetermined mole percent, is made to produce "epoxy group containing liquid polybutene " as chemical intermediate.

The "reactive mono-olefin liquid polymer" according to the present invention is preferable to have the number-average molecular weight in the range of 300 to 6,000. In case of 6,000 or more, the effect of impact resistance and the like increases, but processability can be the problem caused by the increase of viscosity. In case of 300 or less, as the "epoxy group containing liquid polybutene " shown in EP045749A, since mono-olefin polymer chain which is bonded to the "reactive mono-olefin liquid polymer" forms short length, the improvement effect of impact resistance and the like by solubilization into epoxy resin and the like becomes dominant so that thermal resistance represented by HDT becomes deteriorated.

A primary factor that the thermosetting resin composition according to the present invention shows excellent in thermal resistance represented by HDP, impact resistance, and thermal crack resistance, is not clearly explained, and the inventors consider that the primary factor is caused by the affinity between the "reactive mono-olefin liquid polymer" and the thermosetting resin, and peculiar phase structure observed by transmission electron microscope in Figure 1 the brief figure of the typical phase structure is shown.

When a curing reaction of common liquid polybutene is conducted by mixing with thermosetting resin, curing agent and the like, a sea-island structure (hereinafter referred to as "phase structure A"), which is made by a continuous phase consisting primarily of cured product (hereinafter referred to as "cured product") of thermosetting resin(including curing agent if necessary) and a dispersed phase consisting primarily of liquid polybutene, is formed, but the thermosetting resin according to the present invention forms the phase structure which exists interfacial phase in the whole periphery of said dispersed phase (hereinafter referred to as "phase structure B"). Also, the average particle size becomes the microscopic.

Also, the thickness of interfacial phase shows large size as the ratio of the "aldehyde group containing liquid polybutene" in the "reactive mono-olefin liquid polymer" is in larger quantity. This is considered that it is dependent on the reactivity difference between the "aldehyde group containing liquid polybutene" or other "reactive mono-olefin liquid polymer", and thermosetting resin, curing agent, curing promoter and the like. Generally, in case of making the maximum thickness of interfacial phase, a whole quantity of the "reactive mono-olefin liquid polymer" needs only to be made as the "aldehyde group containing liquid polybutene", while in case of decreasing the thickness of the interfacial phase, the ratio of other "reactive mono-olefin liquid polymer" is made to increase.

However, both "phase structure A" and " phase structure B" are not disclosed in EP045749A.

Here, in both phases, as the average particle size of the dispersed phase observed by transmission electron microscope is smaller, the impact resistance becomes excellent. Generally, the excellent properties exhibit in the range of 0.5µm to 20µm. According to the present invention, the adjustment of the average particle size can be conducted by the additive level of the organometallic compound and/or the metal ester compound.

To be more precise, the "phase structure A" is the phase structure where in the continuous phase which consists primarily of the cured product which shows high elasticity and brittle material, the dispersed phase of µm unit size which consists primarily of component related to the "reactive mono-olefin liquid polymer" which has low elasticity and tough material, exists. In the "phase structure A", when deformation by stress generates, by the difference of poisson's ratio between a component of continuous phase and a component of dispersed phase, the force to separate interface generates and separation occurs. Especially, as for the "phase structure A" according to the present invention, the affinity of the continuous phase and the dispersed phase increases by the resemblance of chemical structure, so that energy consumed by said separation is large quantity. Stress (strain) is consumed (released) by separation of said interface, crack and the like which is the cause of fatal fracture of the material to the continuous phase in epoxy resin does not generate and impact resistance and thermal crack properties are improved.

Also, the "phase structure B" is the phase structure where in the continuous phase which consists primarily of the cured product which shows high elasticity and brittle material, the dispersed phase of µm unit size which consists primarily of component related to the "reactive mono-olefin liquid polymer" which has low elasticity and tough material exists, and moreover, it is the phase structure which exists interfacial phase of µm unit size having the main component of polymers as thermosetting resin, curing agent, and "reactive mono-olefin liquid polymer" which have low elasticity and brittle material in the whole periphery. Said structure is the structure, which is confirmed in the phase structure of impact resistant polypropylene resin (block type polypropylene), and which is caiied as multi-phase structure.

To be more precise, as for impact resistant polypropylene resin, the dispersed phase which is formed by polyethylene exists in the continuous phase which is formed by polypropylene, and the interfacial phase which is formed by ethylene-propylene copolymer rubber in the periphery of polyethylene dispersed phase, exists. In the "phase structure B", when a deformation generates by a stress, in addition to the consumption (release) of the stress(strain) generated in the "phase structure A", at interfacial phase as well, by boundary separation, similarly the stress(strain) is consumed(released) so that the boundary separation energy generated per unit volume is larger compared with "phase structure A". Accordingly, crack or the like which is the cause of fatal fracture of the material in the cured product continuous phase does not occur and impact resistance and thermal crack properties are improved more effectively.

In order to develop phase structure according to the present invention, the organometallic compound and/or the metal ester compound of the present invention is used.

The organometallic compound means that organic portion represented by alkyl group and metal are formed in chemical-bonding while metal ester compound means that fatty acid and metal are bonded in the state of ester-bonding. In case when used in the present invention, the two characteristics that can be expected are listed as follows.
(1) Dispersion effect of the "reactive mono-olefin liquid polymer" in the thermosetting resin continuous phase
(2) Coordination effect to oxygen atom in the "reactive mono-olefin liquid polymer"

To begin with, dispersion effect of the "reactive mono-olefin liquid polymer" is explained. In order to control the dispersion particle size of the above mentioned "phase structure A" and/or "phase structure B", in the thermosetting resin composition, the dispersion state of the "reactive mono-olefin liquid polymer" is necessary to control so that the compatibility between the thermosetting resin and the "reactive mono-olefin liquid polymer" grows important. Organic part of the organometal according to the present invention can provide interfacial active role to the thermosetting resin and the "reactive mono-olefin liquid polymer", and a certain level of the dispersion state can be obtained.

For the preferable structure as the organic part, paraffin having chain branch or paraffinic fatty acid having chain branch can be listed. To be more precise, the paraffinic chain branch having chain branch is preferable to improve diffusion properties in the "reactive mono-olefin liquid polymer" system. Also, alicyclic carboxylic acid structure as naphthenic acid compound is recommendable from the above mentioned reason. Naphthenic acid is defined as the naphthenic acid which is saturated carboxylic acid group having naphtheic nuclei, and which is the main component of petroleum acid, and the structure of the naphthenic acid is shown as polymethylene carboxylic acid corresponding to general formula CₙH₂ₙ-₂O₂ (mono-cyclic), CₙH₂ₙ-₄O₂ (bi-cyclic), or moreover, CₙH₂ₙ-₆O₂ (tri-cyclic) and the like.

Then, in case of selecting a substance which can make coordinate-bonding to metal part in organometal with oxygen atom in the "reactive mono-olefin liquid polymer", the "phase structure B" formation is possible to be accelerated. For a kind of metal, metals having coordination bond capability such as cobalt, zinc, tin, copper and the like are recommendable. Here, after having coordination bonding, by catalytic function of said metal compound, the followings and the like are also possible to confirm, where:
1. Epoxy group becomes aldehyde group or ketone group by converting function group in the "reactive mono-olefin liquid polymer", then
2. As a result that the reaction between the "reactive mono-olefin liquid polymer" which is formed to aldehyde group or ketone group and thermosetting resin and the like makes progress, a fact that the "phase structure B" is formed and the like but details are unknown.

The recommendable concrete examples of the above described organometallic compound and/or metallic ester compound are listed as butyl tin, octyl zinc and the like for the organometallic compound, and (di)tin octylate, (di)zinc octylate, tin naphthenate, zinc stearate and the like for the metallic ester compound, but these are not limited. Also, the organometallic compound according to the present invention can be used independently or mixture of two kinds or more.

In producing the thermosetting resin according to the present invention, for the total of the thermosetting resin and the curing agent of 100 parts by weight, the "reactive mono-olefin liquid polymer" of 1 to 200 parts by weight, preferably of 5 to 100 parts by weight can be added. The organometallic compound and/or the metallic ester compound of 10 to 1,000 ppm parts by weight are added. As the larger additive level of the organometallic compound and/or metallic ester compound, the particle size of the dispersed phase in the sea-island phase becomes small, and also becomes uniform

As the curing agent which is added at need according to the present invention, any kind which reacts with the above mentioned thermosetting resin or the "reactive mono-olefin liquid polymer" and which is practicable to cure, can be applied, and for epoxy resin taking as an example, poly-addition type curing agent such as aliphatic polyamine, alicyclic polyamine, aromatic polyamine, anhydride based (methyl hexa hydrophthal anhydride, phthalic anhydride derivatives and the iike);, catalytic type curing agent such as aromatic tertiary amine, imidazole compound, Lewis acid complex and the like; can be listed. Also, the curing agents listed above can be used independently or blending together in the range which does not hinder curing.

The component besides the thermosetting resin, the curing agent, and the "reactive mono-olefin liquid polymer" used for the present invention is curing promoter if taking epoxy resin as the example in the thermosetting resin. As concrete examples, amine based compound and its salt compound such as benzyl dimethyl amine(BDMA), 1-benzyl-2-phenylimidazole, 2-heptadecylimidazole, 2-phenyl-4,5-dihydroxyimidazole, 2-phenyl-4-methyl-5-hydroxymethylimidazole, 2,4-diamino-6-[2-methylimidazolyl-(1)]-ethyl-s-triazine, 1-cyanoethyl-2-undecylicimidazole, 2-ethyl-4-methylimidazole, 1,8-di azabicyclo [5,4,0]undecene-7 and the like; phosphine based and its salt compound such as triphenylphosphine, tres-(2,6-dimethoxyphenyl)phosphine and the like;and ornanometallic salt;, can be listed. As for producing the thermosetting resin compound according to the present invention, if epoxy resin is taken as an example, for 100 parts by weight of the total with the curing agent of the thermosetting resin, the curing promoter can be added to 0 to 20 parts by weight.

In case that the composition according to the present invention is applied to the various applications, as components besides the above mentioned, the publicly known liquid rubber such as liquid reactive rubber, liquid α-olefin polymer and the like; impact resistance improvement such as elastomer, core-shell structure elastomer; fillers such as flame retardant, coupling agent, anti-foam agent, pigment, dye, antioxidant, weathering agent, slipping agent, mold release agent and the like;, can be added and blended appropriately within the limits which do not impair the effect of the present invention. Moreover, liquid polybutene group having other basic structure and/or chemically modified structure can be applied.

Moreover, as for fillers, molten silica, ground silica, talc, calcium carbonate, aluminum hydroxide and the like can be listed and in case of making application to the encapsulation of semi-conductors in the resent years, molten silica having 20µm or less of average particle size is recommendable and they can be used independently or combination of any quantity by mixing two kinds or more.

### <Examples>

The present invention is described in detail according to Examples as follows.

### [Reference Production Examples]

### <Production of "reactive mono-olefin liquid polymer" >

The liquid polybutene reference numerals 1 to 6 shown in Table 1 are used as raw materials and "reactive mono-olefin liquid polymer" 1 ab to 6ab are produced. The attached letter "a" corresponds to "epoxy group containing mono-olefin liquid polymer" and the attached letter "b" corresponds to "aldehyde group containing mono-olefin liquid polymer", which are their raw materials. Reference numerals 1 and 2 among reference numerals 1 to 6, are LV50 and HV-100 respectively, which are manufactured by Nippon Petrochemicals Co., Ltd., which are obtained from market, and which have rich vinylidene terminated structure (commonly called by "highly reactive polybutene") obtained by Reference Production Examples 3 to 6 or by the production method JP10-306128 A which is disclosed by the inventors.

The "epoxy group containing mono-olefin liquid polymer"(Reference Production Examples 1 a to 6a) is produced by reacting the above mentioned liquid polybutene reference numerals 1 to 6 with peracid referring to the above mentioned USP3382255, and the "aldehyde group containing mono-olefin liquid polymer" (Reference Production Examples 1b to 6b) is produced by isomerization of the above mentioned "epoxy group containing mono-olefin liquid polymer" (Reference Production Examples 1 a to 6a) as raw material which is made to act 98 percent by weight sulfuric acid, referring to the method of the above mentioned JP2908557 B.

Each chemical modification is conducted until terminal vinylidene structure and epoxygroup structure in the raw materials are not virtually detected.

**[Table 1]**

| Mono-olefin Liquid Polymer | | | (Corresponding) Epoxy Group containing Mono-olefin Liquid Polymer | (Corresponding) Aldehyde Group containing Mono-olefin Liquid Polymer |
|---|---|---|---|---|
| name | Content | Number-average Molecular Weight (*1) | name | name |
| 1 | LV-50 | 430 | 1 a | 1 b |
| 2 | LV-100 | 980 | 2a | 2b |
| 3 | Highly Reactive Polybutene | 370 | 3a | 3b |
| 4 | Highly Reactive Polybutene | 650 | 4a | 4b |
| 5 | Highly Reactive Polybutene | 1300 | 5a | 5b |
| 6 | Highly Reactive Polybutene | 2300 | 6a | 6b |

| | | | | |
|---|---|---|---|---|
| 1: Shown number-average molecular weight (polystyrene converted value) by GPC measurement | | | | |

### <Examples 1 to 6, Comparative Examples 1 to 3>.

### <Examples of epoxy resin curing reaction and evaluation of physical properties to final composition>

As experimental apparatus, variable type agitator, reaction temperature indicator, and flask which is equipped with reaction dropping gate, are provided in the constant temperature controllable heating medium bath.

The curing reaction is fixed as selecting curing agent/epoxy resin component with MH700/Epikote #828, so as to be functional group equivalent ratio 0.9 in all the conditions. To the curing agent/epoxy resin component, each kind of reactive mono-olefin liquid polymer and organometallic compound and/or metallic ester compound are added so as to be component ratio shown in Table 2, and then are agitated for blending.

After confirming that the component becomes uniform, three steps of thermal history as (1) 100°C X 2hours, (2) 120°C X 2hours and (3) 140°C X 2hours are given, and each epoxy resin cured products are obtained.

Also, the component of abbreviated expressions used in Examples will be described as follows.

Epikote #828(Manufactured by Japan Epoxy Resins Co., Ltd.):
Epikote #828 is the epoxy resin which consists primarily of bisphenol A diglycidyl ether. The equivalent value of functional group (epoxy group) is approximately 190g/eq.
MH-700(Manufactured by New Japan Chemical Co., Ltd.):
   MH-700 anhydride based curing agent consists primarily of methyl hexahydro phthalic anhydride. The equivalent value of functional group(anhydride group) is approximately 168g/eq.
   BDMA (Reagent of Tokyo Kasei Kogyo Co., Ltd.): benzyl amine.

(di) tin octilate(Reagent of Kishida Chemical Co., Ltd):
Another name is tin 2-ethyl hexanate and tin content of approximately 28% product is used.
The evaluations of physical properties of epoxy resin components are conducted for 5 items which are flexibility, moisture resistance, crack resistance, chemical resistance and thermal resistance. For the evaluations of physical properties, about components obtained from each Example and each Comparative Example, test specimens applicable to each measurement are taken.

### < Evaluation methods of physical properties >

Each evaluation method of physical properties will be described.

Moisture resistance: Cured product specimen is kept in boiling water for 10 hours, and moisture resistance of cured product is evaluated by the weight difference of before and after the exposure. Test is conducted for two times and the average value is obtained. Crack resistance: Japanese Industrial Standards (JIS)-C-2105(Electrical Insulating Non- solvent Resin Test Method) is applied and 5 pieces of cured product test specimens which metal washers having different heat conductivity are encapsulated, are prepared, and crack is observed while each test specimen is cooled from 150°C to 0°C,and the average crack number is calculated. Thermal resistance: Heat distortion test (HDT) is measured based on Japanese Industrial Standards (JIS)-K-6901, and the thermal resistance of the cured product is evaluated from the measured value. The measurement is conducted for 5 times and the average value is obtained.

Phase structure observation: Phase structure of Examples and Comparative Examples are observed by the use of transmission electron microscope (TEM)"Apparatus name JEM-1010" manufactured by JEOL. Ltd. Accelerating voltage is 100kV, and ruthenium oxide is used for dyeing. Accordingly, dying phase is concluded that the phase consists primarily of the "reactive mono-olefin liquid polymer".

In Table 2, formulation condition of serial epoxy resin composition and the evaluation results of physical properties are shown.

**Table 2**

| Formulation | | Examples | | | | | | Comparative Examples | | |
|---|---|---|---|---|---|---|---|---|---|---|
| | | 1 | 2 | 3 | 4 | 5 | 6 | 1 | 2 | 3 |
| Reactive Mono-olefin Liquid Polymer(*1) | 1a | 10 | | | | | | 10 | | |
| | 1b | | 10 | | | | | | | |
| | 3a | | | 10 | | | | | 10 | |
| | 3b | | | | 10 | 10 | | | | |
| | 5b | | | | | | 10 | | | |
| O.C.M.C. (*4) | Octylate Tin(*2) | 350 | 165 | 165 | 350 | 165 | 350 | 0 | 0 | 0 |
| Curing Promoter | BDMA | 1 | | | | | | | | |

| Physical Properties-Evaluation | | | | | | | | | | |
|---|---|---|---|---|---|---|---|---|---|---|
| Moisture Resistance | Boiling Water Resistance | 1.1 | 0.9 | 1.0 | 0.8 | 1.0 | 1.0 | 1.2 | 1.1 | 1.0 |
| Crack Resistance | Average Crack Number | 0 | 0 | 0 | 0 | 0 | 0 | 2 | 1 | 7 |
| Thermal Resistance | HDT (°C) | 120 | 128 | 122 | 131 | 128 | 134 | 118 | 122 | 133 |
| Phase Structure | | B | B | B | B | B | B | | | |
| Average Particle Size Distribution(*3) | µm | <20 | <15 | <15 | <10 | <15 | <10 | >35 | >50 | |

| | | | | | | | | | | |
|---|---|---|---|---|---|---|---|---|---|---|
| *1: Formulation is shown as weight percent in cured resin. | | | | | | | | | | |
| *2: Formulation is shown as weight ppm in cured resin. | | | | | | | | | | |
| *3: As for 50 dispersed phase in the printed image used for<phase structure observation>, the particle size is measured and average is calculated. | | | | | | | | | | |
| *4: Organometallic Compound and/or Metallic Ester Compound | | | | | | | | | | |

### Industrial Applicability

By a thermosetting resin composition which is formed by reaction of composition by a formulation of a thermosetting resin, a curing agent, a curing promoter, and a "reactive mono-olefin liquid polymer" and an organometallic compound according to the present invention, the existing problem on physical properties is concluded to be solved. The reason why the problem can be solved as such is that, as the main phase structure, a sea-island structure is made to develop a continuous phase which consists primarily of cured product of the thermosetting resin (induding the curing agent) and a dispersed phase which consists primarily of "reactive mono-olefin liquid polymer", and moreover, an interfacial phase is made so as to have at least one phase in the whole periphery of said dispersed phase.

## Claims

1. A thermosetting composition comprising (A) a thermosetting resin, (B) any of the following liquid mono-olefin polymers (a) to (c) wherein:
(a) a liquid mono-olefin polymer having as least one epoxy group(hereinafter referred to as "epoxy group containing mono-olefin liquid polymer "),
(b) a liquid mono-olefin polymer having at least one aldehyde group(hereinafter referred to as "aldehyde group containing mono-olefin liquid polymer"),
(c) a liquid mono-olefin polymer having at least one ketone group(hereinafter referred to as "ketone group -containing liquid mono-olefin polymer")
(hereinafter the polymers (a) to (c) are collectively referred to as "reactive mono-olefin liquid polymer"), and
(C) an organometallic compound and/or a metal ester compound.

2. The thermosetting composition according to Claim 1 comprising wherein the "reactive mono-olefin liquid polymer" comprises as the above mentioned (a), the "epoxy group containing mono-olefin liquid polymer" which epoxy group is formed on terminal carbon, and/or as the above mentioned (b), the "aldehyde group containing mono-olefin liquid polymer" which aldehyde group is formed on terminal carbon.

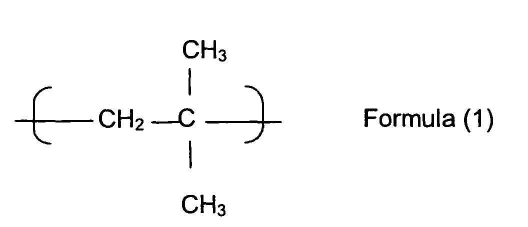

3. The thermosetting composition according to any of Claim 1 to 2 comprising wherein 80% or more of repeated unit in any main chain structure of the "reactive mono-olefin liquid polymer" is represented by the structure of Formula(1 ).

4. The thermosetting composition according to any of Claim 1 to 3 comprising wherein any of number-average molecular weight of the "reactive mono-olefin liquid polymer" is in the range of 300 to 6,000.

5. The thermosetting composition according to any of Claim 1 to 4 comprising wherein "the organometallic compound and/or the metal ester compound" is any of (d) to (f).
(d) Kind of metal is any of cobalt, tin, zinc, copper.
(e) Organic structure part is paraffin or fatty acid having chain branch of 10 or less carbons of main chain.
(f) Organic structure part is naphthenic acid base fatty acid.

6. The thermosetting composition according to any of Claim 1 to 5 comprising wherein the main phase structure of resin phase is a sea-island structure comprising a continuous phase and a dispersed phase and also, a surface phase is the phase structure which exists in the whole periphery of said dispersed phase.

7. The thermosetting composition according to any of Claim 1 to 5 comprising wherein the average particle size of the dispersed phase observed by a transmission electron microscope is 20µm or less.

8. The thermosetting composition according to any of Claim 1 to 5 comprising wherein "the thermosetting resin"(A) is epoxy resin or phenolic resin.
